# EUROPÄISCHE PATENTSCHRIFT

(11) **EP 1 074 821 B1**
(45) Veröffentlichungstag und Bekanntmachung des Hinweises auf die Patenterteilung: **08.02.2006**
(21) Anmeldenummer: 00114269.4
(22) Anmeldetag: 04.07.2000
(51) Int. Cl.: G01F 1/84

(54) **Verfahren zum Anbringen eines Metallkörpers auf ein Messrohr eines Coriolis-Massendurchflussmessgeräts**
Process of fixing a metal body onto a measuring tube of a Coriolis mass flow meter
Procédé pour déposer un corps métallique sur un tube de mesure d'un débitmètre massique de Coriolis

(30) Priorität: 04.08.1999 DE 19936008
(43) Veröffentlichungstag der Anmeldung: 07.02.2001
(73) Patentinhaber: Krohne AG, 4019 Basel (CH)
(72) Erfinder: Cook, Vincent, Earls Barton, Northants NN6 0NA (GB); Davies, Lawrence, Nr Corby, Northants NN18 8 JJ (GB); Harrison, Neil, Duston, Northampton NN5 6SR (GB); Hussain, Yousif, Dr., Weston Favell, Northampton NN3 3DA (GB); Rolpf, Chris, Sakey Lawn, Hartwell, Northampton (GB)
(74) Vertreter: Gesthuysen, von Rohr & Eggert

(56) Entgegenhaltungen:
- EP-A- 0 866 317
- WO-A-92/14123
- DE-A- 1 948 576
- US-A- 3 579 805
- US-A- 5 150 636

## Beschreibung

Die Erfindung betrifft ein Verfahren zum Anbringen eines Metallkörpers auf ein aus Titan oder Zirkon bestehendes, im wesentlichen gerades Meßrohr eines Coriolis-Massendurchflußmeßgeräts.

Bei Massendurchflußmeßgeräten, die nach dem Coriolis-Prinzip arbeiten, unterscheidet man grundsätzlich zwischen einerseits solchen, deren Coriolis-Leitung zumindest im wesentlichen gerade ausgeführt ist, und andererseits solchen, deren Coriolis-Leitung schleifenförmig ausgeführt ist. Außerdem unterscheidet man bei den in Rede stehenden Massendurchflußmeßgeräten zwischen einerseits solchen, die nur eine Coriolis-Leitung aufweisen, und andererseits solchen, die zwei Coriolis-Leitungen aufweisen; bei den Ausführungsformen mit zwei Coriolis-Leitungen können diese strömungstechnisch in Reihe oder parallel zueinander liegen.

In jüngerer Zeit haben sich zunehmend die Massendurchflußmeßgeräte mit einer im wesentlichen geraden Coriolis-Leitung durchgesetzt. Massendurchflußmeßgeräte mit einer geraden Coriolis-Leitung sind in Bezug auf den mechanischen Aufbau einfach, das heißt mit vergleichsweise geringen Kosten herstellbar, auf den Innenflächen der Coriolis-Leitung gut bearbeitbar, z. B. polierbar, weisen einen geringen Druckverlust auf und sind selbstentleerend.

Bei Massendurchflußmeßgeräten besteht das Meßrohr, also die Coriolis-Leitung, häufig aus Titan oder aus Zirkon.

Bei einem geraden Meßrohr aus Titan oder Zirkon besteht die Möglichkeit, einen Metallkörper, der Teil eines für die Schwingungsanregung der Coriolis-Leitung erforderlichen Schwingungserzeugers, Teil eines die Schwingung der Coriolis-Leitung detektierenden Meßwertaufnehmers oder ein Befestigungsring für einen Schwingungserzeuger oder einen Meßwertaufnehmer sein kann, aufgrund einer in dem Metallkörper vorgesehen Bohrung auf das Meßrohr aufzuschieben und auf diesem in den vorgesehenen Befestigungsbereich zu verschieben. Die Befestigung des Metallkörpers in dem vorgesehenen Befestigungsbereich auf dem Meßrohr erfolgte dabei bisher, indem der Metallkörper in dem Befestigungsbereich mit der Außenfläche des Meßrohrs z. B. verschweißt worden ist. Ebenfalls angewandt worden ist eine Hartverlötung des Metallkörpers mit dem Meßrohr.

Sowohl im Falle des Verschweißens als auch im Falle des Hartverlötens besteht die Befestigung des Metallkörpers an dem Meßrohr dabei lediglich in der lokalen Verschweißung bzw. der lokalen Hartverlötung; der überwiegende Bereich der Innenfläche der Bohrung in dem Metallkörper trägt also nicht zur Befestigung bei. Somit sind der Sitz des Metallkörpers sowie dessen Festigkeit beim Betrieb des Coriolis-Massendurchflußmeßgeräts über längere Zeit hinweg aufgrund eines Schwingungsreibungsverschleißes der Schweißnaht bzw. der Hartlötstelle nicht optimal.

Eine alternative Befestigungsmöglichkeit eines Metallkörpers auf dem Meßrohr eines Coriolis-Massendurchflußmeßgeräts ist z. B. in der EP 0 866 317 A1 vorgeschlagen worden. Bei diesem Verfahren wird ein Metallkörper, der eine dem Außenumfang des Meßrohrs des Coriolis-Massendurchflußmeßgeräts angepaßte Bohrung aufweist, auf das Meßrohr aufgeschoben, wonach der Metallkörper bei Umgebungstemperatur dadurch auf das Meßrohr aufgepreßt wird, daß auf mindestens einen Teil der Umfangsfläche des Metallkörpers ein zum Befestigen desselben ausreichender Druck ausgeübt wird, wobei das Lumen des Meßrohrs praktisch nicht eingeengt werden soll. In der Praxis hat sich jedoch gezeigt, daß ein derart auf einem Meßrohr eines Coriolis-Massendurchflußmeßgeräts befestigter Metallkörper im Betrieb des Coriolis-Massendurchflußmeßgeräts, das heißt beim Schwingen des Meßrohrs, ebenfalls einem Schwingungsreibungsverschleiß erleidet, wodurch der Sitz des Metallkörpers auf dem Meßrohr gelockert wird und ein fester Halt des Metallkörpers nicht mehr gewährleistet ist.

Gemäß einem in der EP 0 702 213 A1 beschriebenen Verfahren kann ein auf das Meßrohr eines Coriolis-Massendurchflußmeßgeräts aufgeschobener Metallkörper auch dadurch fest mit dem Meßrohr verbunden werden, daß mit Hilfe eines in das Innere des Meßrohrs eingebrachten Walzwerkzeugs das Meßrohr mit der Innenwand der Bohrung des Metallkörpers ohne Wärmezufuhr verpreßt wird. Dieses Verfahren ist jedoch sehr aufwendig und gewährleistet bei einer längeren Betriebsdauer des Coriolis-Massendurchflußmeßgeräts ebenfalls keinen sicheren Sitz des Metallkörpers auf dem Meßrohr.

Weiterhin ist es aus der US 3,579,805 sowie aus der US 5,150,636 bekannt, einen Metallkörper auf einem Metallrohr durch Aufschrumpfen zu befestigen. Außerdem ist es aus der DE 1 948 576 A bekannt, die Innenfläche eines Stahlzylinders sowie die Oberfläche einer trommelartigen Walze jeweils mit einer Schicht aus Kupfer oder einer Kupferlegierung zu plattieren bzw. zu überziehen und den Stahlzylinder dann auf die trommelartige Walze aufzuschrumpfen, so daß das Kupfer oder die Kupferlegierung auf der Innenfläche des Stahlzylinders und auf der Außenseite der Walzentrommel festsitzend miteinander verbunden werden. Aus der WO 92/14123 ist schließlich ein Coriolis-Massendurchflußmeßgerät bekannt, bei dem das Meßrohr an seinen Enden jeweils mit einem Endflansch verschweißt ist.

Der Erfindung liegt die Aufgabe zugrunde, ein Verfahren zum Anbringen eines Metallkörpers auf ein aus Titan oder Zirkon bestehendes, im wesentlichen gerades Meßrohr eines Coriolis-Massendurchflußmeßgeräts bereitzustellen, mit dem gewährleistet ist, daß der feste Sitz des Metallkörpers auf dem Meßrohr auch über einen sehr langen Betrieb des Coriolis-Massendurchflußmeßgeräts hinweg sicher erhalten bleibt.

Diese Aufgabe wird erfindungsgemäß durch die Gegenstände der Patentansprüche 1, 5 und 14 gelöst.

Eine besonders dauerhafte und gegen einen Schwingungsreibungsverschleiß resistente Verbindung des Metallkörpers mit dem Meßrohr wird dadurch erreicht, daß der Metallkörper nach dem Aufschrumpfen auf das Meßrohr mit diesem verschweißt wird. Auf eine solche Verschweißung des Metallkörpers mit dem Meßrohr kann jedoch insbesondere dann verzichtet werden, ohne daß ein weniger dauerhafter Sitz des Metallkörpers auf dem Meßrohr erzielt wird, wenn der Metallkörper auf einen auf das Meßrohr fest aufgebrachten metallischen Mantel aufgeschrumpft wird. Der metallische Mantel seinerseits kann dabei auf verschiedene Weisen mit dem Meßrohr fest verbunden sein. So kann der metallische Mantel z. B. auf das Meßrohr aufgeschrumpft oder aufgepreßt werden; vorzugsweise wird der metallische Mantel jedoch mit dem Metallkörper verschweißt.

Ein besonders dauerhafter Sitz des Metallkörpers auf dem Meßrohr wird bei Verwendung eines metallischen Mantels dann erzielt, wenn die Länge des Mantels nur wenig größer als die Länge der Bohrung des Metallkörpers ist und der Außendurchmesser des Mantels deutlich größer ist als der Außendurchmesser des Meßrohrs. Auf diese Weise wird erreicht, daß der Mantels aufgrund seiner geringen Länge bei der Schwingung des Meßrohrs nur wenig gebogen wird. Außerdem erhöht sich mit steigendem Außendurchmesser des Mantels dessen Steifigkeit, so daß ein metallischer Mantel mit einem relativ großen Außendurchmesser durch die Schwingung des Meßrohrs nur sehr wenig gebogen wird, wodurch nur wenig Spannung auf die Schweißnähte ausgeübt wird.

Eine zusätzliche Verbesserung des Preßsitzes des Metallkörpers auf dem Meßrohr bzw. auf dem auf dem Meßrohr fest aufgebrachten metallischen Mantel wird dadurch erreicht, daß die Innenfläche der Bohrung in dem Metallkörper mit einem Füllmaterial beschichtet wird. Als Füllmaterial kommt vorzugsweise ein Metall, wie Silber, aber auch ein Kunststoff, wie PTFE, in Betracht.

Erfindungsgemäß ist auch vorgesehen, daß ein Außenkonusring, dessen Innendurchmesser im wesentlichen dem Außendurchmesser des Meßrohrs im Befestigungsbereich entspricht, auf das Meßrohr in dem vorgesehenen Befestigungsbereich aufgrund einer parallel zur Achse des Meßrohrs wirkenden Kraft in einen in einer Bohrung des Metallkörpers vorgesehenen und dem Außenkonus des Außenkonusrings entsprechenden Innenkonusring geschoben und dort gehalten wird, so daß es zu einem Preßsitz des Metallkörpers auf dem Meßrohr kommt. Eine solche Befestigung des Metallkörpers auf dem Meßrohr, bei der der Metallkörper praktisch auf dem Meßrohr verkeilt wird, ist sehr dauerhaft und insbesondere deswegen vorteilhaft, weil die Verkeilung des Metallkörpers auf dem Meßrohr wieder gelöst werden kann, so daß der Metallkörper auf sehr einfache Weise von dem Meßrohr abgenommen werden bzw. auf diesen verschoben werden kann. Insbesondere im Falle einer erforderlichen Reparatur des Meßwertaufnehmers bzw. des Schwingungserzeugers stellt diese Art der Befestigung somit eine wesentliche Arbeitserleichterung dar.

Der Innenkonusring kann als separates Teil gefertigt sein, vorzugsweise ist er jedoch einstückig mit dem Metallkörper ausgebildet.

Eine weitere Erhöhung der Festigkeit des Sitzes des Metallkörpers auf dem Meßrohr wird dadurch erzielt, daß der Außenkonusring auf das Meßrohr fest aufgebracht wird. Der Außenkonusring kann dazu auf das Meßrohr aufgeschrumpft oder aufgepreßt werden. Vorzugsweise wird der Außenkonusring jedoch auf das Meßrohr aufgeschoben und dann mit diesem verschweißt.

Im übrigen ist es auch möglich, den Außenkonusring unverschweißt auf dem Meßrohr zu befestigen, ohne daß ein weniger fester Sitz des Metallkörpers auf dem Meßrohr erzielt wird, indem der Außenkonusring auf einem auf das Meßrohr fest aufgebrachten metallischen Mantel befestigt wird. Dieser Mantel wird vorzugsweise mit dem Meßrohr dadurch fest verbunden, daß er mit diesem verschweißt wird. Dabei ist der Mantel vorzugsweise derart dimensioniert, daß seine Länge nur wenig größer als die Länge der Bohrung des Metallkörpers ist und der Außendurchmesser des Mantels deutlich größer als der Außendurchmesser des Meßrohrs ist. Ein entsprechend ausgebildeter metallischer Mantel weist bei der Verwendung von Außenkonusring und Innenkonusring zur Befestigung des Metallkörpers auf dem Meßrohr die gleichen Vorteile auf, wie oben schon bezüglich der Befestigungsmöglichkeit des Metallkörpers auf dem Meßrohr durch Aufschrumpfen ausgeführt.

Eine besonders gute und in einem großen Temperaturbereich annähernd temperaturunabhängige Übertragung der zum Verschieben und Halten des Außenkonusringes und/oder des Innenkonusringes erforderlichen Kraft auf die breiten Seitenflächen des Außenkonusringes und/oder des Innenkonusringes wird dadurch erzielt, daß die Kraft jeweils über einen an der Seitenfläche des Außenkonusringes und des Innenkonusringes anliegenden Ring übertragen wird. Als Material für diese Ringe findet vorzugsweise Kupfer Anwendung.

Die Kraft zum Verschieben und Halten des Außenkonusringes und des Innenkonusringes wird auf besonders einfache Weise dadurch erzeugt, daß das System aus Außenkonusring und Innenkonusring in einer Verschraubung vorgesehen wird, mit der beim Verschrauben derselben der Außenkonusring und der Innenkonusring ineinander geschoben werden.

Außenkonusring und Innenkonusring können, wie das Meßrohr, aus Titan oder Zirkon sein, möglich ist jedoch auch eine Fertigung des Außenkonusringes und/oder des Innenkonusringes aus Stahl oder aus Edelstahl.

Wie beim Befestigen der Metallkörper auf dem Meßrohr durch Aufschrumpfen, wird auch im vorliegenden Fall eine weitere Erhöhung des Preßsitzes des Metallkörpers auf dem Meßrohr dadurch erzielt, daß die Innenfläche der Bohrung des Außenkonusrings mit einem Füllmaterial beschichtet wird. Als Füllmaterial kommt z. B. ein Metall, wie Silber, oder ein Kunststoff, wie PTFE, in Betracht.

Erfindungsgemäß ist schließlich auch vorgesehen, daß der Metallkörper eine im wesentlichen dem Außendurchmesser des Meßrohrs im Befestigungsbereich entsprechende Bohrung aufweist, daß der Metallkörper auf das Meßrohr aufgeschoben wird und dann entweder auf einen auf das Meßrohr fest aufgebrachten metallischen Mantel aufgepreßt oder direkt auf das Meßrohr aufgepreßt und danach mit diesem verschweißt wird.

Da, wie oben schon ausgeführt, durch Aufpressen des Metallkörpers auf das Meßrohr des Coriolis-Massendurchflußmeßgeräts alleine kein dauerhafter Sitz des Metallkörpers auf dem Meßrohr über eine längere Betriebsdauer des Coriolis-Massendurchflußmeßgeräts hinweg erzielt werden kann, ist vorliegend eine zusätzliche Verschweißung bzw. das Aufpressen des Metallkörpers auf einen zusätzlich auf das Meßrohr fest aufgebrachten Mantel vorgesehen, was ähnliche Vorteile hat, wie das oben beschriebene Aufschrumpfen auf einen auf dem Meßrohr vorgesehenen Mantel bzw. das Verkeilen eines Außenkonusringes mit einem Innenkonusring auf einem solchen Mantel.

Die feste Verbindung des metallischen Mantels mit dem Meßrohr wird auch im Falle des Aufpressens des metallischen Körpers bevorzugt durch Verschweißen des Mantels mit dem Meßrohr erreicht.

Optimaler Sitz des Metallkörpers auf dem Mantel und somit auf dem Meßrohr wird ebenfalls insbesondere dann erzielt, wenn die Länge des Mantels nur geringfügig größer als die Länge der Bohrung des Metallkörpers ist und der Außendurchmesser des Mantels deutlich größer ist als der Außendurchmesser des Meßrohrs.

Zur Verbesserung des Sitzes des Metallkörpers auf dem Meßrohr wird die Innenfläche der Bohrung des Metallkörpers mit einem Füllmaterial beschichtet. Als Füllmaterial kommt vorzugsweise ein Metall, wie Silber, oder ein Kunststoff, wie PTFE, in Betracht.

Für alle oben beschriebenen Verfahren zum Befestigen eines Metallkörpers auf dem Meßrohr, also für das Aufschrumpfen des Metallkörpers, das Verkeilen von Innenkonusring und Außenkonusring und für das Aufpressen des Metallkörpers gilt, daß der Metallkörper vorzugsweis aus Titan oder Zirkon, wie das Meßrohr, oder aber aus Stahl oder Edelstahl ist.

Ferner kann in allen beschriebenen Fällen der Metallkörper ein Befestigungsring für einen Schwingungserzeuger oder einen Meßwertaufnehmer oder Teil eines Schwingungserzeugers oder eines Meßwertaufnehmers sein.

Im einzelnen gibt es nun eine Vielzahl von Möglichkeiten, das erfindungsgemäße Verfahren zum Anbringen eines Metallkörpers auf ein aus Titan oder Zirkon bestehendes, im wesentlichen gerades Meßrohr eines Coriolis-Massendurchflußmeßgeräts auszugestalten und weiterzubilden. Dazu wird verwiesen einerseits auf die den unabhängigen Patentansprüchen nachgeordneten Patentansprüche, andererseits auf die Beschreibung verschiedener Ausführungsbeispiele der erfindungsgemäßen Verfahren in Verbindung mit der Zeichnung.

In der Zeichnung zeigt:
- Fig. 1: schematisch ein Verfahren gemäß einer ersten bevorzugten Ausführungsform der Erfindung, bei der der Metallkörper auf das Meßrohr aufgeschrumpft wird,
- Fig. 2: schematisch ein Verfahren gemäß einer zweiten bevorzugten Ausführungsform der Erfindung, bei der der Metallkörper auf einen mit dem Meßrohr verschweißten metallischen Mantel aufgeschrumpft wird,
- Fig. 3: schematisch ein Verfahren gemäß einer dritten bevorzugten Ausführungsform der Erfindung, bei der die Innenseite der Bohrung des Metallkörper beschichtet ist,
- Fig. 4: schematisch ein Verfahren gemäß einer vierten bevorzugten Ausführungsform der Erfindung, bei der der Metallkörper mit Hilfe eines Systems aus Außenkonusring und Innenkonusring auf dem Meßrohr befestigt wird,
- Fig. 5: schematisch ein Verfahren gemäß einer fünften bevorzugten Ausführungsform der Erfindung, bei der der Metallkörper mit Hilfe eines Systems aus Außenkonusring und Innenkonusring auf einem mit dem Meßrohr verschweißten Mantel befestigt wird,
- Fig. 6: schematisch ein Verfahren gemäß einer sechsten bevorzugten Ausführungsform der Erfindung, bei der der Metallkörper auf dem Meßrohr ebenfalls mit Hilfe eines Systems aus Außenkonusring und Innenkonusring befestigt wird, wobei der Außenkonusring mit dem Meßrohr verschweißt wird,
- Fig. 7: schematisch ein Verfahren gemäß einer siebten bevorzugten Ausführungsform der Erfindung, bei der der Metallkörper mit Hilfe eines Systems aus Außenkonusring und Innenkonusring in einer Verschraubung befestigt wird, und
- Fig. 8: schematisch ein Verfahren gemäß einer achten bevorzugten Ausführungsform der Erfindung, bei der der Metallkörper auf das Meßrohr aufgepreßt wird.

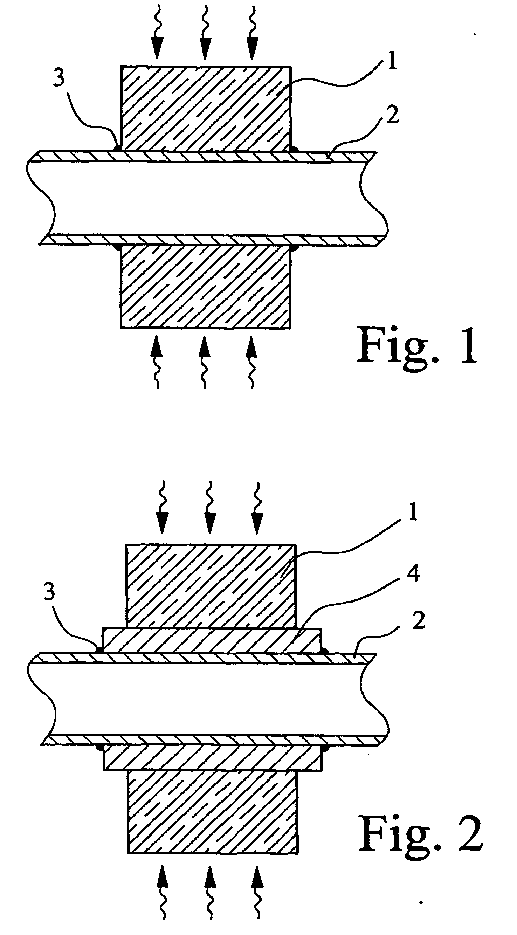

Aus Fig. 1 ist schematisch ein Verfahren gemäß einer ersten bevorzugten Ausführungsform der Erfindung ersichtlich. Im Schnitt ist dargestellt, wie ein Metallkörper 1 auf ein aus Titan oder Zirkon bestehendes, im wesentlichen gerades Meßrohr 2 eines Coriolis-Massendurchflußmeßgeräts durch Aufschrumpfen angebracht wird. Die jeweils drei, radial zur Achse des Meßrohrs 2 zeigenden gewellten Pfeile deuten an, wie der Metallkörper 1 beim Abkühlen seinen Innendurchmesser verringert, wodurch der Metallkörper 1 auf dem Meßrohr 2 in Preßsitz kommt. Um einen dauerhaften Halt des Metallkörpers 1 auf dem Meßrohr 2 zu gewährleisten, wird er nach dem Aufschrumpfen an Schweißstellen 3 zusätzlich noch mit dem Meßrohr 2 verschweißt.

Aus Fig. 2 ist schematisch ein Verfahren gemäß einer zweiten bevorzugten Ausführungsform der Erfindung ersichtlich. Dabei ist im Schnitt dargestellt, daß der Metallkörper 1 nicht direkt auf das Meßrohr 2 sondern auf einen auf dem Meßrohr 2 fest angebrachten metallischen Mantel 4 aufgeschrumpft wird. Der metallische Mantel 4 ist dazu mit dem Meßrohr 2 an Schweißstellen 3 verschweißt.

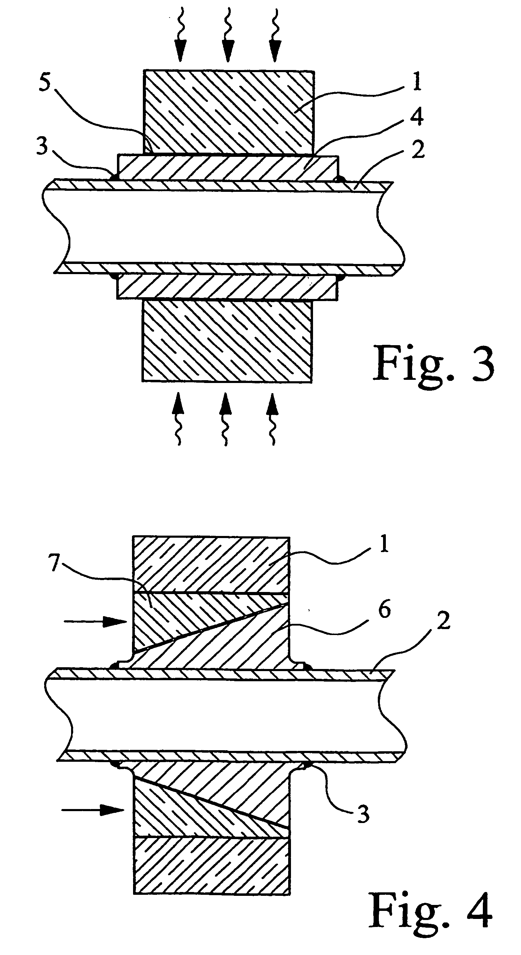

Aus Fig. 3 ist ein Verfahren gemäß einer dritten bevorzugten Ausführungsform der Erfindung ersichtlich. Im Schnitt ist dargestellt, wie zusätzlich zu dem aus Fig. 2 ersichtlichen Verfahren die Innenfläche der Bohrung in dem Metallkörper 1 mit einer Silberschicht 5 beschichtet ist. Die Silberschicht 5 dient als Füllmaterial und verbessert den Sitz und den Halt des Metallkörpers 1 auf dem metallischen Mantel 4 zusätzlich.

Aus Fig. 4 ist schematisch ein Verfahren gemäß einer vierten bevorzugten Ausführungsform der Erfindung ersichtlich. Im Schnitt ist dargestellt, wie der Metallkörper 1 auf dem Meßrohr 2 befestigt wird, indem in die Bohrung des Metallkörpers 1 ein Außenkonusring 6 und ein Innenkonusring 7 hineingeschoben werden. Die dazu erforderliche Kraft wirkt, wie mit Pfeilen dargestellt, auf die breite Seite des Innenkonusrings 7 ein. Indem der Außenkonusring 6 und der Innenkonusring 7 in der Bohrung des Metallkörpers 1 zusammengeschoben werden, werden sie dort verkeilt, so daß es zu einem Preßsitz des Metallkörpers 1 auf dem Meßrohr 2 kommt. Um einen dauerhaften Sitz dieses Systems zu gewährleisten, wird der Außenkonusring 6 zusätzlich an Schweißstellen 3 mit dem Meßrohr 2 verschweißt. Diese Verschweißung kann erfolgen, nachdem der Außenkonusring 6 und der Innenkonusring 7 miteinander verkeilt worden sind. Die Verschweißung des Außenkonusrings 6 mit dem Meßrohr 2 vor dem Verkeilen von Außenkonusring 6 und Innenkonusring 7 erleichtert jedoch die genaue Justierung des Metallkörpers 1 auf dem Meßrohr 2.

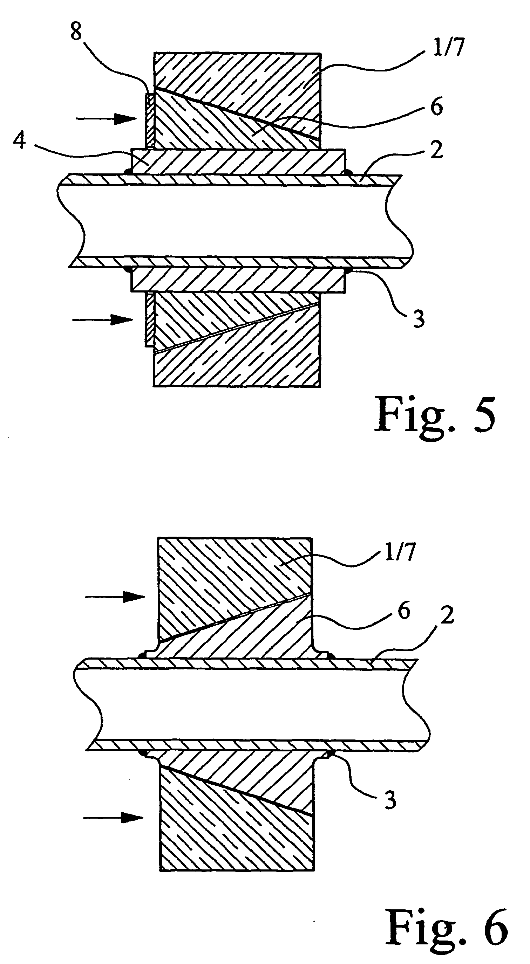

Aus Fig. 5 ist ein Verfahren gemäß einer fünften bevorzugten Ausführungsform der Erfindung ersichtlich. Im Schnitt dargestellt ist, wie der Innenkonusring 7 mit dem Metallkörper 1 einstückig ausgebildet ist und auf den Außenkonusring 6 aufgeschoben wird. Die dazu erforderliche Kraft wird, wie ebenfalls mit Pfeilen dargestellt, auf die breite Seite des Außenkonusrings 6 über einen Kupferring 8 hinweg übertragen. Ferner wird bei dem aus Fig. 5 ersichtlichen Verfahren der Metallkörper 1 mittels des Außenkonusrings 6 nicht direkt auf dem Meßrohr 2 sondern auf einem mit diesem verschweißten metallischen Mantel 4 befestigt. Somit muß der Außenkonusring 6 selbst nicht verschweißt werden.

Aus Fig. 6 ist ein Verfahren gemäß einer sechsten bevorzugten Ausführungsform der Erfindung ersichtlich. Wie im Schnitt gezeigt, wird bei diesem Verfahren im Gegensatz zu dem aus Fig. 5 ersichtlichen Verfahren der Außenkonusring 6 nicht auf einem mit dem Meßrohr 2 verschweißten metallischen Mantel 4 befestigt, sondern direkt auf dem Meßrohr 2 angebracht. Um den erforderlichen festen Sitz des Metallkörpers 1 auf dem Meßrohr 2 zu gewährleisten, wird der Metallkörper 1 mit dem Meßrohr 2 an Schweißstellen 3 verschweißt.

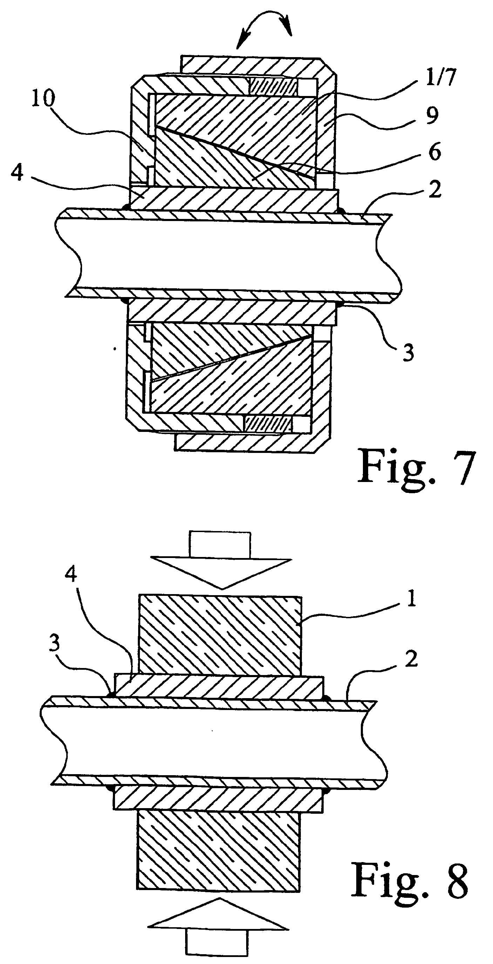

Aus Fig. 7 ist ein Verfahren gemäß einer siebten bevorzugten Ausführungsform der Erfindung ersichtlich. Im Schnitt ist gezeigt, wie der Außenkonusring 6 und der mit dem Metallkörper 1 einstückig ausgebildete Innenkonusring 7 in einer eine Außenverschraubung 9 und eine Innenverschraubung 10 aufweisenden Verschraubung vorgesehen sind. Die beiden Teile der Verschraubung greifen mit Hilfe von Innengewinde bzw. Außengewinde ineinander und lassen sich damit zusammenschrauben. Beim Zusammenschrauben wird aufgrund eines auf der Innenverschraubung 10 vorgesehenen hervorstehenden Bereichs auf die breite Seite des Außenkonusrings 6 eine Kraft ausgeübt, während die breite Seite des den Innenkonusring 7 bildenden Metallkörpers 1 aufgrund der Innenseite der Außenverschraubung 9 ein Widerlager findet. Damit weder die Verschraubung noch der Außenkonusring 6 mit dem Meßrohr 2 verschweißt werden muß, wird das System aus Außenkonusring 6 und Innenkonusring 7 in der Verschraubung auf einem auf dem Meßrohr 2 aufgeschweißten Metallmantel 4 angebracht.

Aus Fig. 8 ist ein Verfahren gemäß einer achten bevorzugten Ausführungsform der Erfindung ersichtlich. Im Schnitt ist dargestellt, wie der Metallkörper 1 auf einen mit dem Meßrohr 2 verschweißten metallischen Mantel 4 aufgepreßt wird. Die radial zur Achse des Meßrohrs 2 hinzeigenden dicken Pfeile deuten den auf den Umfangsbereich des Metallkörpers 1 ausgeübten Druck zum Aufpressen desselben an. Der Metallkörper 1 wird dabei derart mit dem Aufpreßdruck beaufschlagt, daß der Druck nicht auf die gesamte Umfangsfläche des Metallkörpers 1 einwirkt, sondern zwischen den mit dem Druck beaufschlagten Bereichen immer solche Bereiche freibleiben, auf die kein Aufpreßdruck einwirkt, so daß das Material des Metallkörpers 1 teilweise auch radial nach außen ausweichen kann, was das Aufpressen wesentlich erleichtert.

## Patentansprüche

1. Verfahren zum Anbringen eines Metallkörpers (1) auf ein aus Titan oder Zirkon bestehendes, im wesentlichen gerades Meßrohr (2) eines Coriolis-Massendurchflußmeßgeräts, **dadurch gekennzeichnet, daß** der Metallkörper (1) auf einen auf das Meßrohr (2) fest aufgebrachten metallischen Mantel (4) aufgeschrumpft wird.

2. Verfahren nach Anspruch 1, **dadurch gekennzeichnet, daß** der metallische Mantel (4) mit dem Meßrohr (2) verschweißt ist.

3. Verfahren nach Anspruch 1 oder 2, **dadurch gekennzeichnet, daß** die Länge des metallischen Mantels (4) nur geringfügig größer als die Länge der Bohrung des Metallkörpers (1) ist und der Außendurchmesser des Mantels (4) deutlich größer ist als der Außendurchmesser des Meßrohrs (2).

4. Verfahren nach einem der Ansprüche 1 bis 3, **dadurch gekennzeichnet, daß** die Innenfläche der Bohrung mit einem Füllmaterial (5) - vorzugsweise einem Metall, wie Silber, oder einem Kunststoff, wie PTFE - beschichtet wird.

5. Verfahren zum Anbringen eines Metallkörpers (1) auf ein aus Titan oder Zirkon bestehendes, im wesentlichen gerades Meßrohr (2) eines Coriolis-Massendurchflußmeßgeräts, **dadurch gekennzeichnet, daß** ein Außenkonusring (6), dessen Innendurchmesser im wesentlichen dem Außendurchmesser des Meßrohrs (2) im Befestigungsbereich entspricht, auf das Meßrohr (2) in dem vorgesehenen Befestigungsbereich aufgrund einer parallel zur Achse des Meßrohrs (2) wirkenden Kraft in einen in einer Bohrung des Metallkörpers (1) vorgesehenen und dem Außenkonus des Außenkonusrings (6) entsprechenden Innenkonusring (7) geschoben und dort gehalten wird, so daß es zu einem Preßsitz des Metallkörpers (1) auf dem Meßrohr (2) kommt.

6. Verfahren nach Anspruch 5, **dadurch gekennzeichnet**, das der Innenkonusring (7) mit dem Metallkörper (1) einstückig ausgebildet ist.

7. Verfahren nach Anspruch 5 oder 6, **dadurch gekennzeichnet, daß** der Außenkonusring (6) mit dem Meßrohr (2) verschweißt wird.

8. Verfahren nach Anspruch 5 oder 6, **dadurch gekennzeichnet, daß** der Außenkonusring (6) auf einem auf das Meßrohr (2) fest aufgebrachten - vorzugsweise mit dem Meßrohr (2) verschweißten - metallischen Mantel (4) befestigt wird.

9. Verfahren nach Anspruch 8, **dadurch gekennzeichnet, daß** die Länge des metallischen Mantels (4) nur geringfügig größer als die Länge der Bohrung des Metallkörpers (2) ist und der Außendurchmesser des metallischen Mantels (4) deutlicher größer ist als der Außendurchmesser des Meßrohrs (2).

10. Verfahren nach einem der Ansprüche 5 bis 9, **dadurch gekennzeichnet, daß** die zum Verschieben und Halten des Außenkonusringes (6) und/oder des Innenkonusringes (7) erforderliche Kraft auf die breite Seitenfläche des Außenkonusringes (6) und/oder des Innenkonusringes (7) über einen an der Seitenfläche anliegenden Ring (8) - vorzugsweise einen Kupferring - übertragen wird.

11. Verfahren nach einem der Ansprüche 5 bis 10, **dadurch gekennzeichnet, daß** die zum Verschieben und Halten des Außenkonusringes (6) und/oder des Innenkonusringes (7) erforderliche Kraft mit Hilfe einer Verschraubung (9, 10) erzeugt wird.

12. Verfahren nach einem der Ansprüche 5 bis 11, **dadurch gekennzeichnet, daß** der Außenkonusring (6) und/oder der Innenkonusring (7) aus Titan, Zirkon, Stahl oder Edelstahl sind.

13. Verfahren nach einem der Ansprüche 5 bis 12, **dadurch gekennzeichnet, daß** die Innenfläche des Außenkonusrings (6) mit einem Füllmaterial (5) - vorzugsweise einem Metall, wie Silber, oder einem Kunststoff, wie PTFE - beschichtet wird.

14. Verfahren zum Anbringen eines Metallkörpers (1) auf ein aus Titan oder Zirkon bestehendes, im wesentlichen gerades Meßrohr (2) eines Coriolis-Massendurchflußmeßgeräts, wobei der Metallkörper (1) eine im wesentlichen dem Außendurchmesser des Meßrohrs (2) im Befestigungsbereich entsprechende Bohrung aufweist und der Metallkörper (1) auf das Meßrohr (2) aufgeschoben wird, **dadurch gekennzeichnet, daß** der Metallkörper (1) entweder auf einen auf das Meßrohr (2) fest aufgebrachten metallischen Mantel (4) aufgepreßt oder direkt auf das Meßrohr (2) aufgepreßt und danach mit diesem verschweißt wird.

15. Verfahren nach Anspruch 14, **dadurch gekennzeichnet, daß** der Mantel (4) mit dem Meßrohr (2) verschweißt wird.

16. Verfahren nach Anspruch 15, **dadurch gekennzeichnet, daß** die Länge des metallischen Mantels (4) nur geringfügig größer als die Länge der Bohrung des Metallkörpers (1) ist und der Außendurchmesser des metallischen Mantels (4) deutlich größer ist als der Außendurchmesser des Meßrohrs (2).

17. Verfahren nach einem der Ansprüche 14 bis 16, **dadurch gekennzeichnet, daß** die Innenfläche der Bohrung des Metallkörpers (1) mit einem Füllmaterial (5) - vorzugsweise einem Metall, wie Silber, oder einem Kunststoff, wie PTFE - beschichtet wird.

18. Verfahren nach einem der Ansprüche 1 bis 17, **dadurch gekennzeichnet, daß** der Metallkörper (1) aus Titan, Zirkon, Stahl oder Edelstahl ist.

19. Verfahren nach einem der Ansprüche 1 bis 18 **dadurch gekennzeichnet, daß** der Metallkörper (1) ein Befestigungsring für einen Schwingungserzeuger oder einen Meßwertaufnehmer oder Teil eines Schwingungserzeugers oder eines Meßwertaufnehmers ist.

## Claims

1. Process for fixing a metal body (1) onto an essentially straight measuring tube (2), made of titanium or zirconium, of a Coriolis mass flowmeter, **characterized in that** the metal body (1) is shrunk onto a metal casing (4) securely fitted on the measuring tube (2).

2. Process according to Claim 1, **characterized in that** the metal casing (4) is welded to the measuring tube (2).

3. Process according to Claim 1 or 2, **characterized in that** the length of the metal casing (4) is only slightly greater than the length of the bore of the metal body (1) and the outside diameter of the casing (4) is much greater than the outside diameter of the measuring tube (2).

4. Process according to one of Claims 1 to 3, **characterized in that** the inner surface of the bore is coated with a filling material (5) - preferably a metal, such as silver, or a plastic, such as PTFE.

5. Process for fixing a metal body (1) onto an essentially straight measuring tube (2), made of titanium or zirconium, of a Coriolis mass flowmeter, **characterized in that** an externally conical ring (6), the inside diameter of which corresponds essentially to the outside diameter of the measuring tube (2) in the fastening region, is pushed onto the measuring tube (2) in the intended fastening region, on account of a force acting parallel to the axis of the measuring tube (2), into an internally conical ring (7) provided in a bore of the metal body (1) and corresponding to the outer cone of the externally conical ring (6), and is held there, so that a press fit of the metal body (1) on the measuring tube (2) is obtained.

6. Process according to Claim 5, **characterized in that** the internally conical ring (7) is formed in one piece with the metal body (1).

7. Process according to Claim 5 or 6, **characterized in that** the externally conical ring (6) is welded to the measuring tube (2).

8. Process according to Claim 5 or 6, **characterized in that** the externally conical ring (6) is fastened on a metal casing (4) securely fitted on the measuring tube (2) - preferably welded to the measuring tube (2).

9. Process according to Claim 8, **characterized in that** the length of the metal casing (4) is only slightly greater than the length of the bore of the metal body (1) and the outside diameter of the metal casing (4) is much greater than the outside diameter of the measuring tube (2).

10. Process according to one of Claims 5 to 9, **characterized in that** the force required for displacing and holding the externally conical ring (6) and/or the internally conical ring (7) is transferred to the broad side face of the externally conical ring (6) and/or of the internally conical ring (7) via a ring (8) - preferably a copper ring - bearing against the side face.

11. Process according to one of Claims 5 to 10, **characterized in that** the force required for displacing and holding the externally conical ring (6) and/or the internally conical ring (7) is produced with the aid of a screwed coupling (9, 10).

12. Process according to one of Claims 5 to 11, **characterized in that** the externally conical ring (6) and/or the internally conical ring (7) are made of titanium, zirconium, steel or high-grade steel.

13. Process according to one of Claims 5 to 12, **characterized in that** the inner surface of the externally conical ring (6) is coated with a filling material (5) - preferably a metal, such as silver, or a plastic, such as PTFE.

14. Process for fixing a metal body (1) onto an essentially straight measuring tube (2), made of titanium or zirconium, of a Coriolis mass flowmeter, the metal body (1) having a bore corresponding essentially to the outside diameter of the measuring tube (2) in the fastening region and the metal body (1) being pushed onto the measuring tube (2), **characterized in that** the metal body (1) is either pressed onto a metal casing (4) securely fitted on the measuring tube (2) or is pressed directly onto the measuring tube (2) and then welded to the latter.

15. Process according to Claim 14, **characterized in that** the casing (4) is welded to the measuring tube (2).

16. Process according to Claim 15, **characterized in that** the length of the metal casing (4) is only slightly greater than the length of the bore of the metal body (1) and the outside diameter of the metal casing (4) is much greater than the outside diameter of the measuring tube (2).

17. Process according to one of Claims 14 to 16, **characterized in that** the inner surface of the bore of the metal body (1) is coated with a filling material (5) - preferably a metal, such as silver, or a plastic, such as PTFE.

18. Process according to one of Claims 1 to 17, **characterized in that** the metal body (1) is made of titanium, zirconium, steel or high-grade steel.

19. Process according to one of Claims 1 to 18, **characterized in that** the metal body (1) is a fastening ring for a vibration generator or a measured-value transducer or part of a vibration generator or of a measured-value transducer.

## Revendications

1. Procédé pour installer un corps métallique (1) sur un tube de mesure (2) essentiellement rectiligne en titane ou en zirconium d'un débitmètre de masse Coriolis, **caractérisé en ce que** le corps métallique (1) est serti par retrait sur une enveloppe métallique (4) fixée sur le tube de mesure (2).

2. Procédé selon la revendication 1, **caractérisé en ce que** l'enveloppe métallique (4) est soudée sur le tube de mesure (2).

3. Procédé selon la revendication 1 ou 2, **caractérisé en ce que** la longueur de l'enveloppe métallique (4) n'est que légèrement supérieure à celle de l'alésage du corps métallique (1) et le diamètre extérieur de l'enveloppe (4) est nettement supérieur à celui du tube de mesure (2).

4. Procédé selon l'une quelconque des revendications 1 à 3, **caractérisé en ce que** la surface intérieure de l'alésage est revêtue d'une charge (5), de préférence un métal par exemple l'argent, ou une matière synthétique, par exemple le PTFE.

5. Procédé pour installer un corps métallique (1) sur un tube de mesure (2) essentiellement rectiligne en titane ou en zirconium d'un débitmètre de masse Coriolis, **caractérisé en ce que** sous l'action d'une force parallèle à l'axe du tube de mesure (2), un anneau (6) à cône extérieur dont le diamètre intérieur correspond essentiellement au diamètre extérieur du tube de mesure (2) dans la zone de fixation est glissé dans un anneau (7) à cône intérieur qui est prévu dans un alésage du corps métallique (1) et qui correspond au cône extérieur de l'anneau (6) à cône extérieur et est maintenu dans la zone de fixation prévue sur le tube de mesure (2) de manière à fixer par compression le corps métallique (1) sur le tube de mesure (2).

6. Procédé selon la revendication 5, **caractérisé en ce que** l'anneau (7) à cône intérieur est réalisé d'un seul tenant avec le corps métallique (1).

7. Procédé selon la revendication 5 ou 6, **caractérisé en ce que** l'anneau (6) à cône extérieur est soudé sur le tube de mesure (2).

8. Procédé selon la revendication 5 ou 6, **caractérisé en ce que** l'anneau (6) à cône extérieur est fixé sur une enveloppe métallique (4) qui est fixée sur le tube de mesure (2) et qui est de préférence soudée au tube de mesure (2).

9. Procédé selon la revendication 8, **caractérisé en ce que** la longueur de l'enveloppe métallique (4) n'est que légèrement supérieure à celle de l'alésage du corps métallique (1) et le diamètre extérieur de l'enveloppe métallique (4) est nettement supérieur à celui du tube de mesure (2).

10. Procédé selon l'une quelconque des revendications 5 à 9, **caractérisé en ce que** la force nécessaire pour déplacer et maintenir l'anneau (6) à cône extérieur et/ou l'anneau (7) à cône intérieur est transmise à la surface latérale large de l'anneau (6) à cône extérieur et/ou de l'anneau (7) à cône intérieur par l'intermédiaire d'un anneau (8) contigu à la surface latérale, de préférence un anneau de cuivre.

11. Procédé selon l'une quelconque des revendications 5 à 10, **caractérisé en ce que** la force nécessaire pour déplacer et maintenir l'anneau (6) à cône extérieur et/ou l'anneau (7) à cône intérieur est exercée à l'aide d'un filet (9, 10).

12. Procédé selon l'une quelconque des revendications 5 à 11, **caractérisé en ce que** l'anneau (6) à cône extérieur et/ou l'anneau (7) à cône intérieur sont réalisés en titane, en zirconium, en acier ou en acier allié.

13. Procédé selon l'une quelconque des revendications 5 à 12, **caractérisé en ce que** la surface intérieure de l'anneau (6) à cône extérieur est revêtue d'une charge (5), de préférence un métal, par exemple l'argent, ou une matière synthétique, par exemple le PTFE.

14. Procédé pour installer un corps métallique (1) sur un tube de mesure (2) essentiellement rectiligne en titane ou en zirconium d'un débitmètre de masse Coriolis, dans lequel le corps métallique (1) présente un alésage qui correspond essentiellement au diamètre extérieur du tube de mesure (2) dans la zone de fixation et dans lequel le corps métallique (1) est glissé sur le tube de mesure (2), **caractérisé en ce que** le corps métallique (1) est soit serti sur une enveloppe métallique (4) fixée sur le tube de mesure (2), soit serti directement sur le tube de mesure (2) et ensuite soudé sur ce dernier.

15. Procédé selon la revendication 14, **caractérisé en ce que** l'enveloppe (4) est soudée sur le tube de mesure (2).

16. Procédé selon la revendication 15, **caractérisé en ce que** la longueur de l'enveloppe métallique (4) n'est que légèrement supérieure à celle de l'alésage du corps métallique (1) et le diamètre extérieur de l'enveloppe métallique (4) est nettement supérieur à celui du tube de mesure (2).

17. Procédé selon l'une quelconque des revendications 14 à 16, **caractérisé en ce que** la surface intérieure de l'alésage du corps métallique (1) est revêtue d'une charge (5), de préférence un métal, par exemple l'argent, ou une matière synthétique, par exemple le PTFE.

18. Procédé selon l'une quelconque des revendications 1 à 17, **caractérisé en ce que** le corps métallique (1) est réalisé en titane, en zirconium, en acier ou en acier allié.

19. Procédé selon l'une quelconque des revendications 1 à 18, **caractérisé en ce que** le corps métallique (1) est un anneau de fixation pour un générateur d'oscillations, un enregistreur de valeurs de mesure ou une partie d'un générateur d'oscillations ou d'un enregistreur de valeurs de mesure.
